# EUROPÄISCHE PATENTSCHRIFT

(11) **EP 3 332 156 B1**
(45) Veröffentlichungstag und Bekanntmachung des Hinweises auf die Patenterteilung: **12.05.2021**
(21) Anmeldenummer: 16745133.5
(22) Anmeldetag: 01.08.2016
(51) Int. Cl.: F16H 59/72, H02P 29/64

(54) **GETRIEBEANORDNUNG UND ELEKTRISCHE MASCHINE FÜR KRAFTFAHRZEUG UND TEMPERATURERFASSUNGSVERFAHREN HIERFÜR**
TRANSMISSION ARRANGEMENT AND ELECTRIC MACHINE FOR MOTOR VEHICLE AND TEMPERATURE DETECTION METHOD THEREFOR
ENSEMBLE TRANSMISSION ET MACHINE ÉLECTRIQUE POUR VÉHICULE AUTOMOBILE ET PROCÉDÉ DE DÉTECTION DE TEMPÉRATURE ASSOCIÉ

(30) Priorität: 06.08.2015 DE 102015112920
(43) Veröffentlichungstag der Anmeldung: 13.06.2018
(73) Patentinhaber: Magna PT B.V. & Co. KG, 74199 Untergruppenbach (DE)
(72) Erfinder: RICHTER, Ralph, 78112 St. Georgen (DE); GURRATH, Jan, 74072 Heilbronn (DE); LUDWIG, Michael, 74889 Sinsheim (DE); WEINERT, Marc, 74382 Neckarwestheim (DE); MOOSMANN, Hans-Peter, 78144 Tennenbronn (DE)
(74) Vertreter: Rausch, Gabriele
(86) Internationale Anmeldenummer: PCT/EP2016/068324
(87) Internationale Veröffentlichungsnummer: WO 2017/021366

(56) Entgegenhaltungen:
- DE-A1- 3 706 659
- DE-A1-102008 000 784
- DE-A1-102012 016 591
- US-A1- 2010 155 192

## Beschreibung

Die vorliegende Erfindung betrifft eine Getriebeanordnung für ein Kraftfahrzeug, wobei die Getriebeanordnung eine Steuereinrichtung, eine Maschinenleistungselektronik und eine elektrische Maschine aufweist, die eine Mehrzahl von Wicklungen beinhaltet, die über jeweilige Phasenleitungen mit der Maschinenleistungselektronik verbunden sind, und wobei die Maschinenleistungselektronik mit der Steuereinrichtung verbunden ist.

Eine derartige Getriebeanordnung beinhaltet ferner in der Regel ein Gehäuse, an dem die elektrische Maschine festgelegt ist und in dem ein Fluidsumpf mit einem darin aufgenommenen Fluid ausgebildet ist.

Ferner betrifft die vorliegende Erfindung ein Verfahren zum Erfassen der Maschinentemperatur einer solchen elektrischen Maschine.

In Getriebeanordnungen, wie sie in Antriebssträngen von Kraftfahrzeugen verwendet werden, können elektrische Maschinen als Elektromotor zur Bereitstellung von Antriebsleistung für das Kraftfahrzeug verwendet werden, beispielsweise in einem Hybrid-Antriebsstrang. Weiter ist es bekannt, Getriebeanordnungen derartiger Antriebsstränge zu automatisieren, wobei die Aktuatorik Elektromotoren beinhalten kann. Diese können bspw. entweder direkt als Aktuatoren verwendet werden, oder können als Antrieb für Pumpen einer Hydraulikanordnung verwendet werden.

Wie erwähnt, weisen derartige Getriebeanordnungen generell ein Gehäuse auf, innerhalb dessen ein Fluidsumpf ausgebildet ist. Bei der automatisierten Betätigung solcher Getriebeanordnungen ist es wichtig, die Temperatur des in dem Fluidsumpf aufgenommenen Fluides zu kennen. Denn das Fluid ist in der Regel ein Öl, dessen Viskosität vergleichsweise stark von der Temperatur abhängt. Folglich können sich je nach Temperatur des Fluides andere Randbedingungen für die Ansteuerung von Komponenten der Getriebeanordnung ergeben, wie beispielsweise Schaltkupplungen oder auch Anfahr- oder Trennkupplungen. In manchen Fällen beinhalten derartige Hydraulikanordnungen auch elektromotorisch angetriebene Pumpen zum Bereitstellen von Kühl- und/oder Schmierfluid. Das Kühl- und/oder Schmierfluid kann beispielsweise Getriebekomponenten oder einer nass laufenden Lamellenkupplung zugeführt werden.

Zum Erfassen der Temperatur des Fluides ist es bekannt, in dem Fluidsumpf einen Temperatursensor zu anzuordnen.

Ein derartiger Temperatursensor ist jedoch teuer. Ferner ist es schwierig, die ordnungsgemäße Funktion dieses Fluidtemperatursensors zu überprüfen. Aus dem Dokument DE 10 2012 016 591 A1 ist ein Temperaturermittlungsverfahren in einer Hydraulikanordnung bekannt, wobei die Temperatur eines Fluides auf der Grundlage eines für die Hydraulikanordnung spezifischen Zusammenhanges zwischen der Drehzahl des elektrischen Motors und der Temperatur des Fluides bei einem vorgegebenen Druck des Fluides ermittelt wird.

DE 10 2008 000 784 A1 betrifft einen Elektromotor mit einem Spulenelement mit einer Wicklung, wobei die Wicklung des Spurenelements an einem Element des Elektromotors so angeordnet ist, dass ein komplexer Widerstand der Wicklung temperaturabhängig ist. Die vorgeschlagene Messung wird bei laufendem Elektromotor durchgeführt.

DE 37 06 659 A1 betrifft eine Einrichtung zum Erfassen der Wicklungstemperatur eines BLDC Motors. Auch hier ist die Messung bei laufendem Motor vorgesehen.

Die US 2010/155192 A1 beschreibt ein hydraulisches System. Es weist eine Möglichkeit zur Temperaturmessung einer Fluid-Pumpe auf, die über die Widerstandswerte der Wicklung erfolgt.

Vor diesem Hintergrund ist es eine Aufgabe der Erfindung, eine verbesserte Getriebeanordnung, sowie ein verbessertes Verfahren zum Erfassen einer Temperatur anzugeben, wobei vorzugsweise wenigstens einer der oben genannten Nachteile vermieden wird.

Die obige Aufgabe wird zum einen gelöst durch eine Getriebeanordnung gemäß Anspruch 1.

Es handelt sich um eine Getriebeanordnung für ein Kraftfahrzeug, mit einer Steuereinrichtung, mit einer Maschinenleistungselektronik und mit einer elektrischen Maschine, die eine Mehrzahl von Wicklungen aufweist, die über jeweilige Phasenleitungen mit der Maschinenleistungselektronik verbunden sind, wobei die Maschinenleistungselektronik mit der Steuereinrichtung verbunden ist, und wobei die Steuereinrichtung einen Temperaturerfassungsabschnitt aufweist, der mit wenigstens einer Phasenleitung verbunden und dazu ausgelegt ist, ein Anregungssignal in die Phasenleitung einzuspeisen, und wobei der Temperaturerfassungsabschnitt dazu ausgebildet ist, ein Antwortsignal in der Phasenleitung zu erfassen und aus dem Antwortsignal eine Wicklungstemperatur der der Phasenleitung zugeordneten Wicklung abzuleiten.

Schließlich wird die obige Aufgabe gelöst durch ein Verfahren gemäß Anspruch 2. Es handelt sich um ein Verfahren zum Erfassen der Maschinentemperatur einer elektrischen Maschine für eine Getriebeanordnung gemäß Anspruch 1, wobei die elektrische Maschine wenigstens eine mit einer Phasenleitung verbundene Wicklung aufweist, mit den Schritten, ein Anregungssignal in die Phasenleitung einzuspeisen, ein Antwortsignal auf der Phasenleitung zu erfassen, und die Maschinentemperatur aus dem Antwortsignal zu berechnen.

Erfindungsgemäß lässt sich die Maschinentemperatur auf einfache Weise erfassen. Die Maschinentemperatur ist erfindungsgemäß gleich der Wicklungstemperatur. Bei den Wicklungen kann es sich insbesondere um Ständerwicklungen handeln. Die elektrische Maschine kann insbesondere eine Gleichstrommaschine sein, deren Rotor Permanentmagnete aufweist.

Das erfindungsgemäße Erfassungsverfahren basiert darauf, dass der Ohm'sche Widerstand der Wicklung temperaturabhängig ist.

Bei einer elektrischen Maschine mit mehreren Wicklungen, die insbesondere über den Umfang der elektrischen Maschine verteilt angeordnet sind, ist es von besonderem Vorzug, wenn ein Anregungssignal nur in eine der Phasenleitungen eingespeist wird. Hierdurch kann verhindert werden, dass die elektrische Maschine aufgrund des Anregungssignals anläuft. Das erfindungsgemäße Verfahren findet bei Stillstand der elektrischen Maschine Anwendung. Hierdurch kann verhindert werden, dass die Erfassung des Antwortsignals verfälscht wird, beispielsweise aufgrund von magnetischer Induktion.

Das Anregungssignal ist insbesondere ein kurzer Spannungsimpuls, und das Antwortsignal ist insbesondere eine Stromimpulsantwort.

Die elektrische Maschine ist ein Antriebsaggregat für ein Kraftfahrzeug s, das elektromotorisch oder generatorisch betrieben werden kann. Die Steuereinrichtung beinhaltet vorzugsweise einen Speicher mit einer Tabelle, in der unterschiedliche Antwortsignale in Relation zu bestimmten Wicklungs- bzw. Maschinentemperaturen abgelegt sind. Alternativ ist es auch möglich, dass die Steuereinrichtung das jeweils erfasste Antwortsignal mathematisch analysiert, beispielsweise hinsichtlich der Steigung des Antwortsignals in bestimmten Zeitabschnitten. Aus einer derartigen mathematischen Analyse kann dann vorzugsweise ebenfalls eine Wicklungs- oder Maschinentemperatur abgeleitet werden.

Bei der erfindungsgemäßen Getriebeanordnung ist es von Vorzug, dass die Getriebeanordnung ein Gehäuse aufweist, an dem die elektrische Maschine festgelegt ist und in dem ein Fluidsumpf mit einem darin aufgenommenen Fluid ausgebildet ist.

Bei dieser Ausführungsform kann die Temperatur eines Gehäuses der elektrischen Maschine der Temperatur des Gehäuses der Getriebeanordnung entsprechen. Die Temperatur des Gehäuses der Getriebeanordnung entspricht in der Regel der Temperatur des Fluides, das in dem Fluidsumpf aufgenommen ist. Folglich kann aus der Maschinentemperatur auf die Fluidtemperatur rückgeschlossen werden.

Die elektrische Maschine kann dabei außen an dem Gehäuse der Getriebeanordnung festgelegt sein, ist jedoch vorzugsweise innerhalb des Gehäuses der Getriebeanordnung festgelegt.

Bei dem erfindungsgemäßen Erfassungsverfahren ist es dabei von besonderem Vorzug, dass die Schritte des Einspeisens des Anregungssignals, des Erfassens des Antwortsignals und des Berechnens der Maschinentemperatur durchgeführt werden, wenn die elektrische Maschine für eine vorbestimmte Zeitspanne nicht zum Zwecke des Bereitstellens von Antriebsleistung bestromt wurde.

Hierdurch kann erreicht werden, dass sich die Temperatur der elektrischen Maschine im Wesentlichen an die Temperatur des Gehäuses angepasst hat. Auch die Temperatur der Wicklung der elektrischen Maschine und die Temperatur des Gehäuses der elektrischen Maschine sind dabei aneinander angeglichen. Bei einer Bestromung der elektrischen Maschine zum Bereitstellen von Antriebsleistung könnte die Wicklungstemperatur hingegen aufgrund interner Verluste angestiegen sein, so dass eine Korrelation zwischen der Wicklungstemperatur und der Fluidtemperatur nicht möglich ist.

Durch die oben besprochenen Maßnahmen kann es jedoch vorzugsweise möglich sein, die Temperatur des Fluides in der Getriebeanordnung über eine Anregung der elektrischen Maschine zu erfassen. Hierdurch können erhebliche Kosteneinsparungen realisiert werden. Mechanische Einflüsse können hierdurch vorzugsweise vermieden werden, insbesondere dann, wenn nur eine Phasenleitung mit dem Anregungssignal beaufschlagt wird, so dass keine Kommutierung stattfindet, da sich die elektrische Maschine dann vorzugsweise nicht bewegt und den Messwert nicht verfälscht.

Bei der erfindungsgemäßen Getriebeanordnung ist es hierbei ferner von Vorteil, dass ein Temperatursensor zum Messen der Fluidtemperatur des Fluides mit der Steuereinrichtung verbunden ist.

Durch diese Maßnahme ist es möglich, die Fluidtemperatur anhand von zwei unabhängigen Messverfahren zu erfassen, nämlich einerseits über den Temperatursensor und andererseits über das Einspeisen des Anregungssignals und des Auswertens eines Antwortsignals auf der Phasenleitung. Hierdurch kann die Fluidtemperatur mit einer erhöhten Redundanz sicher erfasst werden.

Gemäß der Erfindung beinhaltet die Steuereinrichtung eine Vergleichseinrichtung, die die Wicklungstemperatur und die Fluidtemperatur vergleicht.

Hierdurch ist es beispielsweise auch möglich, die Funktion bzw. die Betriebsfähigkeit des Temperatursensors zu überprüfen.

Demgemäß beinhaltet ein Verfahren zum Überprüfen der Funktion eines Temperatursensors die Verwendung des oben beschriebenen Erfassungsverfahrens, wobei die berechnete Maschinentemperatur mit der von dem Temperatursensor gemessenen Temperatur verglichen wird, um die Funktion des Temperatursensors zu überprüfen.

Wie oben erwähnt, erfolgt das erfindungsgemäße Erfassungsverfahren in einer Getriebeanordnung, und zwar bei Stillstand der elektrischen Maschine, wobei die elektrische Maschine für eine vorbestimmte Zeitspanne nicht zum Zwecke des Bereitstellens von Antriebsleistung bestromt wurde, so dass davon ausgegangen werden kann, dass sich die Temperatur der elektrischen Maschine insgesamt an die Temperatur innerhalb der Getriebeanordnung angepasst hat und folglich mit der Temperatur des Fluides korreliert. Mit anderen Worten spiegelt die Wicklungstemperatur vorzugsweise die Temperatur in dem Fluidsumpf wieder, zumindest bei für längere Zeit nicht bestromtem Motor.

Aus dem Dokument DE 37 06 659 A1 ist es bekannt, bei laufendem Motor die Bestimmung des Ohm'schen Wicklungswiderstandes durch eine Messung während einer Zeitspanne erfolgen zu lassen, in der sich die Wicklung im stromlosen Zustand befindet. Hierdurch soll die Temperatur der Wicklung erfasst werden. Bei der vorliegenden Erfindung wird jedoch vorzugsweise darauf abgestellt, aus der Wicklungstemperatur die Maschinentemperatur zu erfassen bzw. abzuleiten, aus der dann wiederum die Temperatur einer Umgebung der elektrischen Maschine abgeleitet werden kann, beispielsweise die Temperatur eines Fluides in einem Fluidsumpf einer Getriebeanordnung.

Die Zeitspanne, für die die elektrische Maschine vorzugsweise nicht bestromt wird, um das erfindungsgemäße Verfahren durchzuführen, beträgt vorzugsweise 10 Sekunden, insbesondere 30 Sekunden, besonders bevorzugt 60 Sekunden und insbesondere 2 Minuten.

Ausführungsbeispiele der Erfindung sind in der Zeichnung dargestellt und werden in der nachfolgenden Beschreibung näher erläutert. Es zeigen:
Fig. 1 eine schematische Darstellung eines Antriebsstranges eines Kraftfahrzeuges mit einer Ausführungsform einer nicht erfindungsgemäßen Getriebeanordnung;
Fig. 1a ein Zeitablaufdiagramm eines beispielhaften Anregungssignals und von beispielhaften Antwortsignalen bei der Durchführung eines erfindungsgemäßen Erfassungsverfahrens;
Fig. 2 ein beispielhaftes Flussdiagramm eines erfindungsgemäßen Erfassungsverfahrens; und
Fig. 3 ein beispielhaftes Flussdiagramm eines erfindungsgemäßen Verfahrens zum Überprüfen der Temperatur eines Temperatursensors.

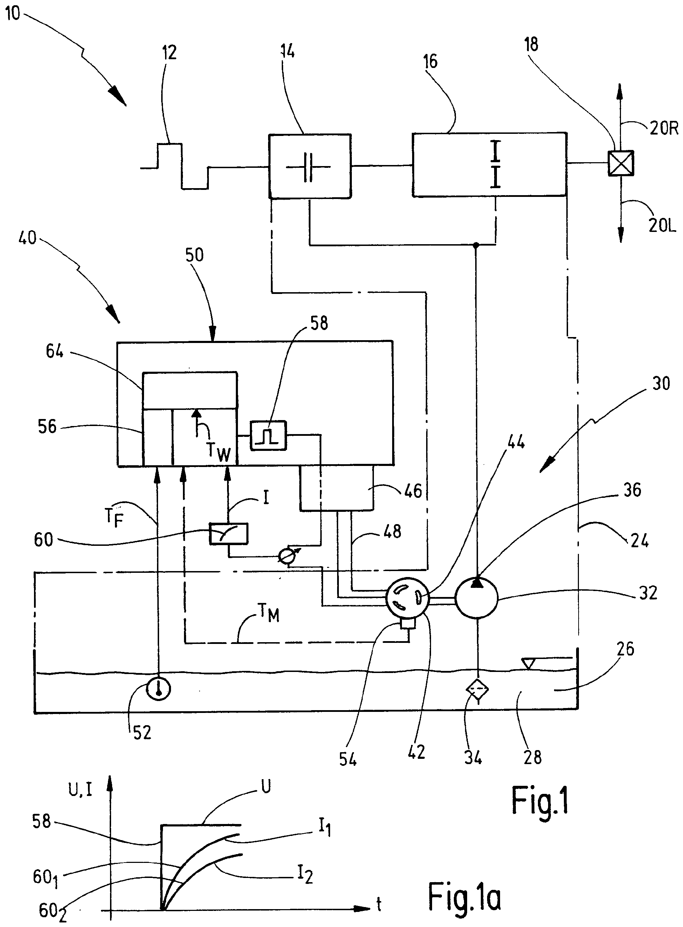

In Fig. 1 ist ein Antriebsstrang für ein Kraftfahrzeug schematisch dargestellt und generell mit 10 bezeichnet.

Der Antriebsstrang 10 beinhaltet einen Antriebsmotor 12 wie einen Verbrennungsmotor, dessen Antriebswelle mit dem Eingang einer Kupplungsanordnung 14 verbunden ist. Die Kupplungsanordnung 14 kann eine einfache Anfahr- und Trennkupplung sein, kann jedoch auch eine Doppelkupplung beinhalten. Die Kupplungsanordnung 14 ist ausgangs- seitig mit einer Getriebeanordnung 16 verbunden. Die Getriebeanordnung 16 kann ein Getriebe in Stirnradbauweise beinhalten, insbesondere in Form eines Vorgelegegetriebes. Die Kupplungsanordnung 14 und die Getriebeanordnung 16 können jedoch auch durch ein Wandler-Automatikgetriebe gebildet sein, um ein Beispiel zu nennen.

Ein Ausgang der Getriebeanordnung 16 ist mit einem Differenzial 18 verbunden, mittels dessen Antriebsleistung auf angetriebene Räder 20L, 20R des Kraftfahrzeuges verteilbar ist.

Die Kupplungsanordnung 14 und die Getriebeanordnung 16 beinhalten ein Gehäuse 24, innerhalb dessen ein Fluidsumpf 26 zur Aufnahme eines Fluides 28 ausgebildet ist. Das Fluid 28 kann beispielsweise ein Öl sein, wie ein ATF-ÖI.

Das Gehäuse 24 kann in ein Kupplungsgehäuse und in ein Getriebegehäuse unterteilt sein, wobei der Fluidsumpf 26 dem Kupplungsgehäuse, dem Getriebegehäuse oder beidem zugeordnet sein kann.

Ferner beinhaltet der Antriebsstrang 10 eine Hydraulikanordnung 30. Die Hydraulikanordnung 30 weist eine Pumpe 32 auf, die Fluid 28 aus dem Fluidsumpf 26 ansaugt, und zwar vorzugsweise über ein Fluidfilter 34 und einen nicht näher bezeichneten Sauganschluss der Pumpe 32. Ein Druckanschluss 36 der Pumpe kann entweder mit einer oder mehreren Kolben-/Zylinderanordnungen verbunden sein, um Komponenten des Antriebsstranges 10 zu betätigen. Der Druckanschluss 36 kann jedoch auch mit einer Schmier- und/oder Kühlfluidleitung verbunden sein, die der Kupplungsanordnung 14 Fluid 28 zu Kühl- und/oder Schmierzwechen bereitstellt Ferner kann eine derartige Fluidleitung die mit dem Druckanschluss 36 der Pumpe 32 verbunden ist, auch mit der Getriebeanordnung 16 verbunden sein, alternativ zu der Kupplungsanordnung 14 oder zusätzlich zu der Kupplungsanordnung 14. Hier kann das Fluid 28 beispielsweise zum Schmieren von Getriebekomponenten wie Lagern, Zahnrädern, etc. dienen.

Die Kupplungsanordnung 14 und die Getriebeanordnung 16 können als separate

Komponenten vorgesehen sein. Die Kupplungsanordnung 14 kann jedoch auch in die Getriebeanordnung 16 integriert sein.

Die Getriebeanordnung 16 (und/oder die Kupplungsanordnung 14) beinhaltet eine elektrische Maschinenanordnung 40, die eine elektrische Maschine 42 aufweist. Die elektrische Maschine 42 ist vorzugsweise als bürstenloser Gleichstrommotor ausgebildet, wobei ein Rotor der elektrischen Maschine 42 (nicht dargestellt) mit Permanentmagneten ausgestattet ist. Die elektrische Maschine 42 beinhaltet ferner eine Mehrzahl von über den Umfang verteilt angeordneten Wicklungen 42 in Form von Statorwicklungen, die zum Ansteuern der elektrischen Maschine 42 mit einer Maschinenleistungselektronik 46 verbunden sind, und zwar über jeweilige Phasenleitungen 48.

Die Maschinenleistungselektronik 46 beinhaltet Leistungs-Halbleiterbauteile wie Thyristoren, Transistoren oder dergleichen, und wird von einer Steuereinrichtung 50 angesteuert, die die Leistungs-Halbleiterbauteile in an sich bekannter Art und Weise ansteuert.

Die elektrische Maschinenanordnung 40 kann in manchen Fällen als Antriebsmotor dienen, so dass der Antriebsstrang 10 als Hybrid-Antriebsstrang ausgebildet ist. Vorliegend ist die elektrische Maschinenanordnung 40 Teil der Hydraulikanordnung 30, wobei die elektrische Maschine 42 zum Antrieb der Pumpe 32 dient. Die Pumpe 32 kann folglich bedarfsweise mittels der Steuereinrichtung 50 angetrieben werden, um bedarfsweise Fluid an dem Druckanschluss 36 bereitzustellen, sei es zu Kühl-, zu Schmier- oder zu Aktuierungszwecken.

Die elektrische Maschine 42 ist vorzugsweise innerhalb des Gehäuses 24 aufgenommen, derart, dass ein Gehäuse der elektrischen Maschine 42 thermisch leitend mit dem Gehäuse 24 verbunden ist. In manchen Fällen kann das Gehäuse 24 auch ein Gehäuse der elektrischen Maschine 42 bilden.

Die Wicklungen 44 sind auf das Gehäuse der elektrischen Maschine gewickelt. Dies erfolgt derart, dass die Temperatur der Wicklungen zumindest im stationären Zustand im Wesentlichen der Temperatur des Gehäuses der elektrischen Maschine 42 entspricht. Sofern das Maschinengehäuse thermisch leitend mit dem Gehäuse 24 verbunden ist, entspricht folglich die Wicklungstemperatur der Wicklungen 44 zumindest in einem stationären Zustand im Wesentlichen der Temperatur des Gehäuses 24.

In dem Gehäuse 24 ist das Fluid 28 aufgenommen, das sich im Betrieb des Antriebsstranges 10 in der Regel erwärmt. Eine typische Nenn-Betriebstemperatur des Fluides 28 liegt beispielsweise im Bereich von 60°C bis 120°C.

Im stationären Zustand entspricht die Temperatur des Fluides 28 folglich auch weitgehend der Temperatur des Gehäuses 24, und zwar jedenfalls an solchen Stellen, an denen das Gehäuse 24 von innen mit dem Fluid 28 in Kontakt kommt, sei es im Bereich des Fluidsumpfes 26 oder in einem Bereich, bei dem Spritzfluid auf eine Innenwand des Gehäuses 24 spritzt, wie beispielsweise innerhalb des Gehäuses der Getriebeanordnung 16. Das Spritzöl kann beispielsweise durch Eintauchen von Zahnrädern oder dergleichen in den Ölsumpf 26 erzeugt werden. Das Spritzöl kann jedoch auch radial nach außen abspritzendes Fluid sein, das im Wege einer Einspritzschmierung beispielsweise der Kupplungsanordnung 14 zugeführt wird.

Die Funktionsweise der Hydraulikanordnung 30 hängt von der Temperatur des Fluides 28 ab, da dessen Viskosität stark von der Temperatur abhängt.

In der Steuereinrichtung 50 erfolgt daher beispielsweise eine Betätigung der Pumpe 32 vorzugsweise in Abhängigkeit von der Temperatur des Fluides 28.

Zu diesem Zweck kann die Steuereinrichtung 50 mit einem optionalen Fluidtemperatur-sensor 52 verbunden sein, dessen Sensorelement beispielsweise in dem Fluid 28 angeordnet ist. Der Fluidtemperatursensor 52 erfasst unmittelbar die Temperatur T_{F} des Fluides 28.

Ferner kann die elektrische Maschine 42 einen Maschinentemperatursensor 54 aufweisen, die Maschinentemperatur T_{M} erfasst und der Steuereinrichtung 50 übermittelt. Ein derartiger Maschinentemperatursensor 54 ist optional, wie es durch die gestrichelte Linie angedeutet ist.

Ferner ist die elektrische Maschinenanordnung 40, die die elektrische Maschine 42, die Maschinenleistungselektronik 46 und - zumindest teilweise - die Steuereinrichtung 50 beinhaltet, dazu in der Lage, die Temperatur des Fluides 28 mittelbar zu erfassen, und zwar über eine sensorlose Temperaturerfassung unter Nutzung der Temperaturabhängigkeit des Ohm'schen Widerstandes von wenigstens einer Wicklung 44.

Diese weitere Temperaturmessung kann dabei entweder dazu verwendet werden, um den Fluidtemperatursensor 52 zu ersetzen oder aber dessen Funktionsweise zu überprüfen

Genauer gesagt beinhaltet die Steuereinrichtung 50 einen Temperaturerfassungsabschnitt 56, mittels dessen ein Anregungssignal 58, beispielsweise in der Form eines elektrischen Spannungsimpulses, auf eine der Phasenleitungen 48 gegeben werden kann. Da vorzugsweise nur eine der Phasenleitungen 48 und folglich nur eine der Wicklungen 44 mit einem derartigen Anregungssignal 58 beaufschlagt wird, führt dies in der Regel nicht zu einem Anlaufen der elektrischen Maschine 42.

Das Einspeisen des Anregungssignals 58 in eine Phasenleitung 48 erfolgt vorzugsweise in einem Ruhezustand der elektrischen Maschinenanordnung 40, also vorzugsweise dann, wenn die elektrische Maschine für eine vorbestimmte Zeitspanne nicht zum Zwecke des Bereitstellens von Antriebsleistung bestromt wurde.

In dieser Art von Ruhezustand kann näherungsweise davon ausgegangen werden, dass die Wicklungstemperatur der Wicklung 44 sich an die Temperatur des Fluides 28 angeglichen hat bzw. mit dieser korreliert. Aufgrund des Ruhezustandes und der wärmeleitenden Verbindung zwischen Fluid 28, Gehäuse 24 und Gehäuse der elektrischen Maschine 42 kann eine derartige Korrelation bzw. Übereinstimmung nach der vorbestimmten Zeitspanne angenommen werden.

Der Temperaturerfassungsabschnitt 56 ist ferner dazu ausgebildet, ein Antwortsignal 60 auf der gleichen Phasenleitung 48 zu erfassen, und zwar beispielsweise in Form einer Impulsantwort des elektrischen Stromes in der Phasenleitung 48.

Aus der Stromimpulsantwort lässt sich dann die Temperatur der Wicklung 44 ermitteln.

Dies kann beispielhaft erfolgen, wie es in Fig. 1a dargestellt ist. Fig. 1a ist ein Zeitablaufdiagramm von Spannung und Strom in der Phasenleitung 48 über der Zeit. Bei 58 ist ein Anregungssignal in Form eines Spannungsimpulses gezeigt. Bei 60₁ ist ein erstes Antwortsignal in Form eines Strom Verlaufes gezeigt. Bei 60₂ ist ein zweites Antwortsignal in Form eines zweiten elektrischen Stromverlaufes l₂ gezeigt. Die unterschiedlichen Antwortsignale 60^ 60₂ lassen auf unterschiedliche Temperaturen der Wicklung 44 schließen. Die Ermittlung der Wicklungstemperatur ist ferner eine Funktion des Materials der Wicklung bzw. der Phasenleitung, also beispielsweise Kupfer oder ein anderes elektrisch leitendes Material.

In dem Temperaturerfassungsabschnitt 56 der Steuereinrichtung 50 kann dabei eine Tabelle abgelegt sein, die bestimmte Stromimpulsantworten l₁, l₂, etc. mit vorab abgespeicherten Stromimpulsantworten vergleicht, um auf eine Temperatur der Wicklung 44 rückschließen zu können. Der Temperaturerfassungsabschnitt 56 kann jedoch auch einen Berechnungsabschnitt beinhalten, der aus dem jeweiligen Antwortsignal 60₁, 60₂ eine Temperatur der Wicklung 44 berechnet.

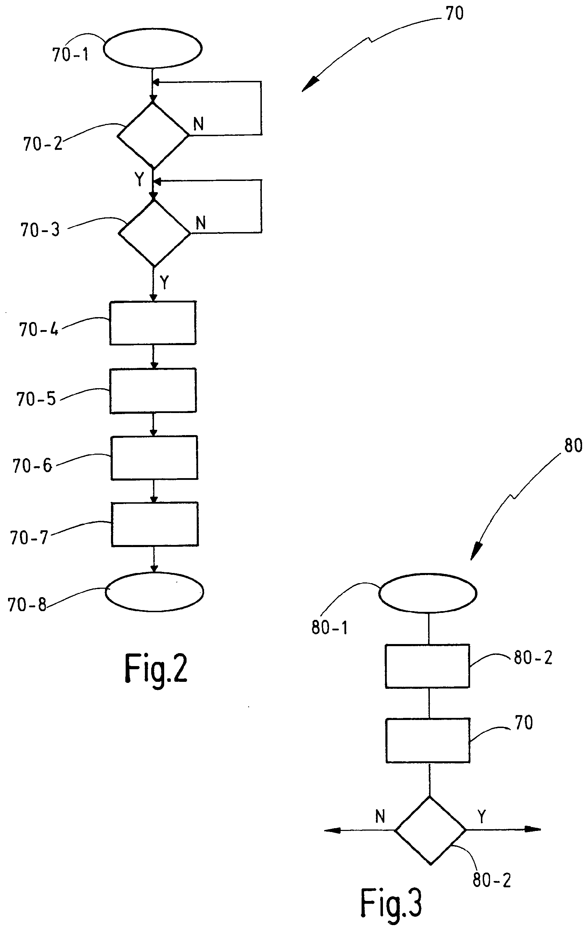

Fig. 2 zeigt ein Flussdiagramm mit einer beispielhaften Ausführungsform eines erfindungsgemäßen Verfahrens zum Erfassen der Maschinentemperatur einer elektrischen Maschine, das insbesondere im Umfeld eines Antriebsstranges für ein Kraftfahrzeug bzw. eine Getriebeanordnung ausgeübt wird.

Das in Fig. 2 gezeigte Verfahren 70 beinhaltet einen Startschritt 70-1. Nach dem Startschritt erfolgt ein Abfrageschritt 70-2, mit dem abgefragt wird, ob die Maschinentemperatur zu erfassen ist. Falls nein (N), geht das Programm zum Anfang zurück. Falls ja (Y), erfolgt in dem folgenden Schritt 70-3 die nächste Abfrage, ob nämlich die elektrische Maschine für eine vorbestimmte Zeitspanne nicht zum Zwecke des Bereitstellens von Antriebsleistung bestromt wurde. Wenn dies nicht der Fall ist (N), wenn also innerhalb der vorbestimmten Zeitspanne eine Bestromung der elektrischen Maschine stattfand, geht das Verfahren zurück zum Beginn des Schrittes 70-3. Wenn hingegen für längere Zeit keine Bestromung der elektrischen Maschine stattfand (Y), geht das Verfahren über zum Schritt 70-4. Im Schritt 70-4 wird ein Anregungssignal 58 auf eine Phasenleitung 48 gegeben. In dem folgenden Schritt 70-5 wird ein Antwortsignal 60 auf der gleichen Phasenleitung erfasst.

Im Schritt 70-6 erfolgt eine Auswertung des Antwortsignals und eine Berechnung der Maschinentemperatur aus dem Antwortsignal, wobei das Berechnen Rechenschritte beinhalten kann, oder nur ein Ablesen aus einer Tabelle.

In dem Schritt 70-7 wird die ermittelte Maschinentemperatur ausgegeben. Im Schritt 70-8 ist das Programm 70 zu Ende.

Fig. 3 zeigt ein Flussdiagramm eines Verfahrens zum Überprüfen der Funktion eines Temperatursensors.

Das in Fig. 3 gezeigte Verfahren 80 beinhaltet einen Startschritt 80-1, nach dem in einem Schritt 80-2 zunächst die Temperatur mittels eines Temperatursensors gemessen wird.

In dem folgenden Schritt 70 wird das Verfahren gemäß Fig. 2 ausgeführt, das zu der Maschinentemperatur führt.

In dem Schritt 80-2 werden die Maschinentemperatur, die in dem Verfahren 70 ermittelt worden ist, und die von dem Temperatursensor gemessene Temperatur miteinander verglichen, um die Funktion des Temperatursensors zu überprüfen. Folglich ist das Ergebnis der Abfrage des Schrittes 80-2 entweder eine Funktionsfähigkeit des Temperatursensors (Y), oder ein Fehler in dem Temperatursensor (N).

## Patentansprüche

1. Getriebeanordnung (16) für ein Kraftfahrzeug, mit einer Steuereinrichtung (50), mit einer Maschinenleistungselektronik (46) und mit einer elektrischen Maschine (42), die als Antriebsmotor in einem Hybridantriebsstrang des Kraftfahrzeugs ausgebildet ist, die eine Mehrzahl von Wicklungen (44) aufweist, die über jeweilige Phasenleitungen (48) mit der Maschinenleistungselektronik (46) verbunden sind, wobei die Maschinenleistungselektronik (46) mit der Steuereinrichtung (50) verbunden ist, und wobei die Steuereinrichtung (50) einen Temperaturerfassungsabschnitt (56) aufweist, der mit wenigstens einer Phasenleitung (48) verbunden und dazu ausgelegt ist, ein Anregungssignal (58) beim Stillstand der elektrischen Maschine (42) in die Phasenleitung (48) einzuspeisen, und wobei der Temperaturerfassungsabschnitt (56) dazu ausgebildet ist, ein Antwortsignal (60) in der Phasenleitung (48) zu erfassen und aus dem Antwortsignal (60) eine Wicklungstemperatur (T_{w}) der der Phasenleitung (48) zugeordneten Wicklung (44) abzuleiten, mit einem Gehäuse (24), an dem die elektrische Maschine (42) festgelegt ist und in dem ein Fluidsumpf (26) mit einem darin aufgenommenen Fluid (28) ausgebildet ist, wobei ein Temperatursensor (52) zum Messen der Fluidtemperatur (T_{F}) des Fluides (28) mit der Steuereinrichtung (50) verbunden ist und die Steuereinrichtung (50) eine Vergleichseinrichtung (64) aufweist, die die Wicklungstemperatur (T_{w}) und die Fluidtemperatur (T_{F}) vergleicht.

2. Verfahren zum Erfassen der Wicklungstemperatur (T_{w}) einer elektrischen Maschine (42) für eine Getriebeanordnung (16) eines Kraftfahrzeuges nach Anspruch 1, wobei die elektrische Maschine wenigstens eine mit einer Phasenleitung (48) verbundene Wicklung (44) aufweist, mit den Schritten:
a) Einspeisen eines Anregungssignals (U) in die Phasenleitung (48),
b) Erfassen eines Antwortsignals (I) auf der Phasenleitung (48);
c) Berechnen der Maschinentemperatur (T_{w}) aus dem Antwortsignal (I)

3. Verfahren nach Anspruch 2, wobei die Schritte a) bis c) durchgeführt werden, wenn die elektrische Maschine (42) für eine vorbestimmte Zeitspanne nicht zum Zwecke des Bereitstellens von Antriebsleistung bestromt wurde.

4. Verfahren zum Überprüfen der Funktion eines Temperatursensors (52) unter Verwendung des Erfassungsverfahrens nach einem der Ansprüche 2 oder 3, wobei die berechnete Maschinentemperatur mit der von dem Temperatursensor (52) gemessenen Temperatur (T_{F}) verglichen wird, um die Funktion des Temperatursensors (52) zu überprüfen.

## Claims

1. Transmission arrangement (16) for a motor vehicle, comprising a control device (50), a machine power electronics system (46), and an electric machine (42) which is designed as a drive motor in a hybrid drive train and includes a plurality of windings (44) which are connected to the machine power electronics system (46) via particular phase conductors (48), wherein the machine power electronics system (46) is connected to the control device (50), and wherein the control device (50) includes a temperature detection portion (56) which is connected to at least one phase conductor (48) and is designed for feeding an excitation signal (58) into the phase conductor (48) during the standstill of the electric machine (42), and wherein the temperature detection portion (56) is designed for capturing a response signal (60) in the phase conductor (48), and from the response signal (60), deriving a winding temperature (Tw) of the winding (44) assigned to the phase conductor (48), comprising a housing (24), on which the electric machine (42) is located and in which a fluid sump (26), which has a fluid (28) accommodated therein, is formed, wherein a temperature sensor (52) is connected to the control device (50) for measuring the fluid temperature (T_{F}) of the fluid (28) and the control device (50) comprises a comparator unit (64) which compares the winding temperature (Tw) and the fluid temperature (T_{F}).

2. Method for detecting the winding temperature (Tw) of an electric machine (42) for a transmission arrangement (16) of a motor vehicle according to Claim 1, wherein the electric machine comprises at least one winding (44) connected to a phase conductor (48), including the steps:
a) feeding an excitation signal (U) into the phase conductor (48),
b) detecting a response signal (I) on the phase conductor (48);
c) calculating the machine temperature (Tw) from the response signal (I).

3. Method according to Claim 2, wherein the steps a) to c) are carried out when the electric machine (42) has not been energized for the purpose of providing drive power for a predetermined period of time.

4. Method for checking the function of a temperature sensor (52) by utilizing the detection method according to either of Claims 2 and 3, wherein the calculated machine temperature is compared with the temperature (T_{F}) measured by the temperature sensor (52), in order to check the function of the temperature sensor (52).

## Revendications

1. Ensemble transmission (16) pour un véhicule automobile, comprenant un dispositif de commande (50), comprenant une électronique de puissance de machine (46) et comprenant une machine électrique (42), qui est réalisée sous la forme d'un moteur de propulsion dans une chaîne cinématique hybride du véhicule automobile, lequel possède une pluralité d'enroulements (44) qui sont reliés à l'électronique de puissance de machine (46) par le biais de lignes de phase (48) respectives, l'électronique de puissance de machine (46) étant reliée au dispositif de commande (50) et le dispositif de commande (50) possédant une portion d'acquisition de température (56) qui est reliée à au moins une ligne de phase (48) et qui est conçue pour injecter un signal d'excitation (58) dans la ligne de phase (48) lorsque la machine électrique (42) est immobilisée, et la portion d'acquisition de température (56) étant configurée pour détecter un signal de réponse (60) dans la ligne de phase (48) et, à partir du signal de réponse (60), dériver une température d'enroulement (Tw) de l'enroulement (44) associé à la ligne de phase (48), comprenant un boîtier (24) auquel est fixée la machine électrique (42) et dans lequel est formé un carter de décantation à fluide (26) dans lequel est accueilli un fluide (28), une sonde de température (52) destinée à mesurer la température de fluide (T_{F}) du fluide (28) étant reliée au dispositif de commande (50) et le dispositif de commande (50) possédant un dispositif de comparaison (64) qui compare la température d'enroulement (Tw) et la température de fluide (T_{F}).

2. Procédé d'acquisition de la température d'enroulement (Tw) d'une machine électrique (42) pour un ensemble transmission (16) pour un véhicule automobile selon la revendication 1, la machine électrique possédant au moins un enroulement (44) relié à une ligne de phase (48), comprenant les étapes suivantes :
a) injection d'un signal d'excitation (U) dans la ligne de phase (48),
b) détection d'un signal de réponse (I) sur la ligne de phase (48),
c) calcul de la température de machine (Tw) à partir du signal de réponse (I).

3. Procédé selon la revendication 2, les étapes a) à c) étant exécutées lorsque la machine électrique (42) a été mise sous tension pendant un intervalle de temps prédéterminé non à des fins de fourniture d'une puissance motrice.

4. Procédé de contrôle du fonctionnement d'une sonde de température (52) en utilisant le procédé d'acquisition selon l'une des revendications 2 ou 3, la température de machine calculée étant comparée à la température (T_{F}) mesurée par la sonde de température (52) afin de contrôler le fonctionnement de la sonde de température (52).
